(19) Europäisches Patentamt
European Patent Office
Office européen des brevets

(11) **EP 2 237 396 B1**

(12) **FASCICULE DE BREVET EUROPEEN**

(45) Date de publication et mention
de la délivrance du brevet:
**03.07.2019 Bulletin 2019/27**

(51) Int Cl.:
*H02K 5/15* *(2006.01)*    *H02K 5/16* *(2006.01)*
*H02K 5/24* *(2006.01)*

(21) Numéro de dépôt: **10157147.9**

(22) Date de dépôt: **22.03.2010**

(54) **Moteur à induction de type tubulaire à deux sens de rotation pour applications domotiques**

Rohrförmige Induktionsmotor mit zwei Drehrichtungen für Heimanlage

Bi-directional tubular type induction motor for home-automation

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0901558**

(43) Date de publication de la demande:
**06.10.2010 Bulletin 2010/40**

(73) Titulaire: **SOMFY ACTIVITES SA**
**74300 Cluses (FR)**

(72) Inventeurs:
 • **Perret, Jean-Marc**
**74190, PASSY (FR)**

 • **Brondex, Adrien**
**74700, DOMANCY (FR)**

(74) Mandataire: **Novaimo**
**ActiTech 8**
**60 avenue Marie Curie**
**Archamps Technopole**
**74166 Saint Julien-en-Genevois Cedex (FR)**

(56) Documents cités:
**EP-A- 0 184 724    EP-A- 0 410 933**
**JP-A- 60 091 852    US-A- 2 462 204**
**US-A- 5 945 759    US-A1- 2008 054 747**

**Description**

L'invention concerne le domaine des moteurs tubulaires de type moteur à induction (ou moteur asynchrone), avec rotor à cage d'écureuil et à double sens de rotation utilisés dans des actionneurs tubulaires destinés à une installation dans un bâtiment.

Par moteur tubulaire, on entend un moteur inséré dans un tube extérieur contenant l'actionneur tubulaire et dont la longueur du paquet de tôles stator est généralement plus importante que son diamètre extérieur. Les actionneurs tubulaires sont installés en position horizontale dans un bâtiment, par exemple pour l'enroulement de toiles de stores ou d'écrans ou pour l'enroulement de volets roulants.

Le moteur tubulaire est donc un des composants contenus dans le tube de l'actionneur tubulaire. Les autres composants sont un réducteur et généralement une unité de contrôle. Il en résulte que les vibrations du moteur sont transmises directement ou indirectement à un tube long, dont au pire ils peuvent exciter des modes propres et/ou dont au moins ils utilisent l'ensemble de la surface comme surface radiative. Une attention particulière doit être portée à la limitation ou à l'atténuation de ces vibrations, d'autant plus que l'usage de ces actionneurs est principalement lié au confort dans l'habitat ou à la gestion de la luminosité ou des apports solaires dans les bureaux et que le silence de manoeuvre s'impose dans ces applications.

Le fait que le moteur soit simultanément un moteur tubulaire et un moteur à axe horizontal engendre des problèmes de maîtrise du niveau sonore, qui sont de plus aggravés par les caractéristiques spécifiques d'un moteur à induction. Ces problèmes tiennent notamment aux différentes causes d'excentricité du rotor dans l'alésage stator. L'excentricité est d'autant plus difficile à supprimer que le rotor est long et/ou que le guidage du rotor n'est pas assuré au plus près du stator.

En particulier, un moteur à induction de type bipolaire alimenté à 50 Hz présente un champ tournant à 50 tr/s. Par rapport au rotor, ce champ entraîne une force pulsante 100 Hz dont l'amplitude est modulée à deux fois la fréquence de glissement du rotor par rapport au champ tournant. Cette modulation s'applique également à l'ensemble des fréquences pulsantes et notamment aux pulsations dues aux passages d'encoches dont la fréquence est égale au produit de la fréquence de rotation rotor par le nombre d'encoches stator (soit près de 600 Hz pour un moteur 12 encoches stator tournant, à vide, à près de 50 tr/s).

Quand le moteur à vide tourne par exemple à 48 tr/s, la fréquence de modulation est de 4 Hz. Il s'ensuit un bruit modulé très basse fréquence, de type battement, à la fois désagréable et dégradant fortement la qualité perçue du moteur.

De manière économique, le guidage d'un arbre est réalisé par des paliers lisses (ou paliers pleins) plutôt que par des roulements. De ce fait, il existe un léger jeu radial de l'arbre dans le palier qui aggrave le phénomène précédent quand il s'exerce dans la même direction que la pesanteur. Le bruit modulé très basse fréquence dépend alors en intensité de l'orientation du moteur autour de son axe horizontal, ce qui dégrade également la qualité perçue.

Le fait que le moteur soit à double sens de rotation impose la présence de deux ou trois phases de manière à pouvoir inverser le sens du champ tournant. Ces phases sont réalisées à l'aide de bobinages insérés dans le paquet de tôles stator. De ce fait, chaque extrémité du moteur est complètement occupée par les têtes de bobinages, appelées également chignons. Chaque tête de bobinage est recouverte en partie ou le plus souvent complètement par un capotage isolant, désigné par boîtier d'isolation ou bol. La présence de ces têtes de bobinages écarte généralement les paliers du rotor l'un par rapport à l'autre. Plus le moteur tubulaire présente un faible diamètre, plus la longueur de chignon est importante en proportion. Ainsi, les moteurs tubulaires auxquels s'adresse l'invention présentent-ils des bols de longueur généralement au moins supérieure au rayon du moteur.

Le brevet EP 0410933 décrit un moteur à induction avec rotor à cage d'écureuil et de type tubulaire utilisé dans le domaine de l'invention. L'arbre rotor est guidé par des roulements éloignés du rotor et maintenus par des flasques centrés par le tube extérieur.

Le moteur à induction est de plus caractérisé par un entrefer étroit. Une valeur typique est de 0.4 mm pour un moteur tubulaire de diamètre compris entre 40 et 60 mm. La valeur de cet entrefer n'est limitée que par le jeu nécessaire à la libre rotation du rotor dans l'alésage stator en tenant compte des possibles défauts géométriques, ceux-ci étant aggravés par la distance importante entre paliers. Cette valeur rend normalement inapplicable des solutions de centrage envisageables pour d'autres types de moteur, et notamment des moteurs dont le rotor comporte des aimants permanents et supportant des entrefers beaucoup plus importants.

Le brevet US 3,873,861 décrit un moteur à cage d'écureuil, non-tubulaire, dont le rotor est supporté par deux paliers lisses. Ces paliers sont eux-mêmes insérés dans des flasques. Un des flasques est constitué par un premier boîtier d'isolation des bobinages stator. L'autre flasque est raccordé au deuxième boîtier d'isolation des bobinages stator. Les paliers sont relativement proches du rotor, mais le centrage de l'arbre rotor est effectué par l'intermédiaire des boîtiers d'isolation. Le moteur étant de type court, les problèmes évoqués ci-dessus ne sont probablement pas significatifs.

Le brevet US 5,166,565 décrit un même principe de guidage par l'intermédiaire des boîtiers d'isolation des bobinages stator, cette fois assuré par des roulements.

Dans le cas du moteur décrit dans le brevet US 6,515,385 le guidage est assuré par des roulements très éloignés du rotor à cage d'écureuil.

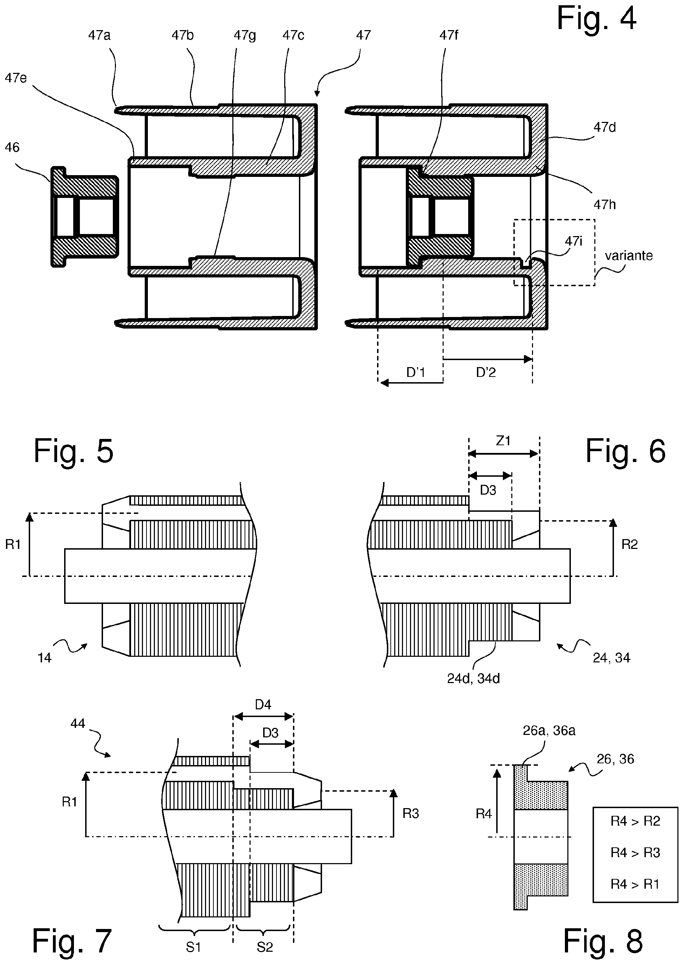

Au contraire, le brevet US 6,399,007 décrit une structure moteur à induction à pôle caché avec rotor court, non tubulaire, pour lequel le guidage du rotor est assuré par des paliers lisses pouvant être maintenus très proches du rotor (figure 6). Cette configuration est rendue possible par la structure du bobinage (non représenté) autour de la portion intérieure du stator dans ces moteurs particuliers à un seul sens de rotation. Les paliers ont un diamètre très inférieur au diamètre stator.

A l'exception du brevet US 6,399,007 qui s'adresse à un type de moteur non réversible, tous les moteurs ci-dessus présentent des paliers ou roulements maintenus par des supports principalement raccordés au tube extérieur ou principalement raccordés aux moyens d'isolation électrique des bobinages. Sur le plan vibratoire les micro-déplacements radiaux des paliers sont dans un premier cas directement transmis au tube extérieur. Dans le deuxième cas, ces micro-déplacements ne sont pas ou peu contraints et peuvent prendre une amplitude significative.

Il existe donc pour les actionneurs tubulaires du bâtiment un besoin de réalisation d'un moteur tubulaire à faible coût, de type à induction avec rotor à cage d'écureuil, permettant de garantir une bonne précision d'alignement du rotor et du stator et une très faible excitation du tube de l'actionneur par les vibrations transmises aux paliers supportant le rotor.

On connaît des documents US 5945759 et US 2462204 un moteur incluant un stator comportant un paquet de tôles formant un alésage central et une pièce support d'un palier centrée dans l'alésage central.

Le but de l'invention est de fournir un moteur remédiant aux inconvénients ci-dessus et améliorant les moteurs connus de l'art antérieur. En particulier, l'invention permet de réaliser de manière simple et économique un moteur de type à induction avec rotor à cage d'écureuil tout en garantissant une bonne précision d'alignement du rotor et du stator et une très faible excitation du tube de l'actionneur tubulaire contenant le moteur par les vibrations transmises aux paliers supportant le rotor. L'invention permet en outre d'améliorer le fonctionnement du moteur, notamment d'améliorer son rendement mécanique, dans un environnement de basses températures. L'invention permet enfin de limiter les mouvements axiaux du rotor par rapport au stator.

Un moteur à induction selon l'invention est défini par la revendication 1.

Différents modes de réalisation sont définis par les revendications dépendantes 2 à 11.

L'invention sera mieux comprise à la lecture de la description qui va suivre, donnée uniquement à titre d'exemple et faite en se référant aux dessins annexés sur lesquels :

> La figure 1 représente un moteur tubulaire selon l'art antérieur.
> La figure 2 représente un premier mode de réalisation de l'invention.
> La figure 3 représente un deuxième mode de réalisation de l'invention.
> La figure 4 représente un ensemble palier et boîtier d'isolation selon le deuxième mode de réalisation.
> La figure 5 représente une extrémité d'un rotor selon l'art antérieur.
> La figure 6 représente une extrémité d'un rotor selon l'invention.
> La figure 7 représente une variante d'extrémité d'un rotor selon l'invention.
> La figure 8 représente une relation dimensionnelle sur un palier du moteur selon l'invention.

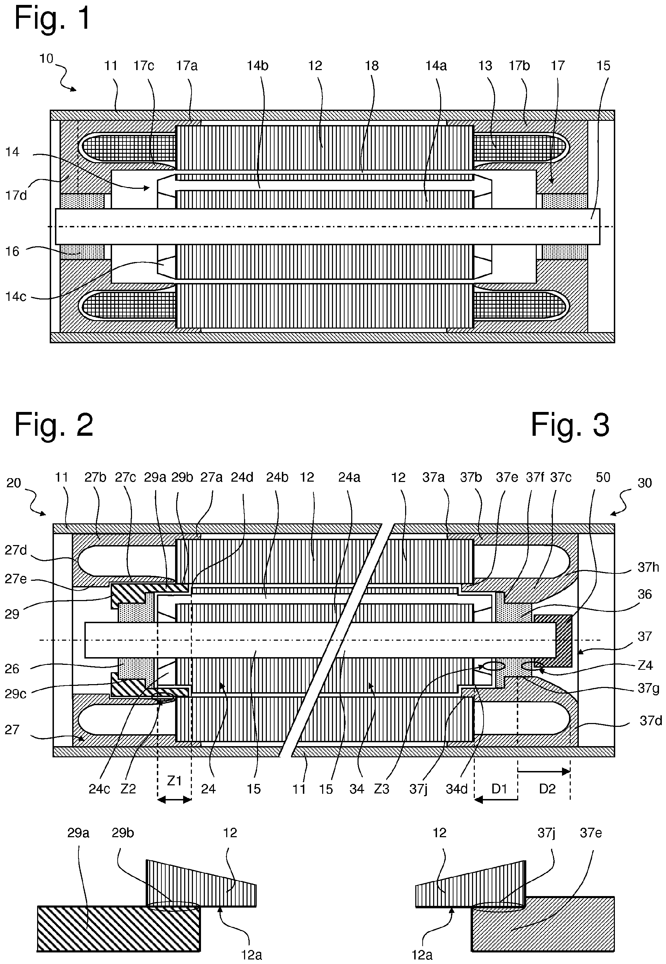

La figure 1 représente, en coupe longitudinale, un moteur tubulaire 10 selon l'art antérieur. Le moteur tubulaire est inséré dans un tube extérieur 11, s'étendant de part et d'autre du moteur et représenté de manière tronquée. Le tube extérieur 11 est le tube d'un actionneur tubulaire destiné à être installé dans un bâtiment et comprenant au moins un réducteur mécanique, non représenté. Le moteur comprend un paquet de tôles stator 12 comprenant des encoches, non visibles selon cette coupe, dans lesquelles sont insérés des bobinages en fil de cuivre émaillé. A l'extérieur du stator, les spires des bobinages passent d'une encoche à une encoche presque diamétralement opposée, formant des têtes de bobinages 13 ou chignons. Selon le type de procédé de bobinage utilisé, bobinage « flyer » ou bobinage traditionnel par insertion, les têtes de bobinages sont plus ou moins importantes en volume. Le moteur comprend un rotor 14 fixé sur un arbre 15. Le rotor comprend un paquet de tôles rotor 14a, ces tôles étant généralement issues du même procédé de découpe que les tôles stator. Les tôles rotor sont également munies d'encoches ou de lumières et l'empilement des tôles rotor crée des cavités longitudinales 14b, remplies d'aluminium (un alliage d'aluminium) lors d'une opération de surmoulage et formant ainsi des conducteurs aluminium. De part et d'autre du rotor, une bague de court-circuit 14c, obtenue lors de la même opération de surmoulage, permet de connecter tous les conducteurs aluminium des encoches ou lumières du rotor. Sur la figure, le rotor comprend un nombre impair de lumières, par exemple quinze lumières ce qui explique qu'une seule cavité longitudinale est visible en coupe. Un palier 16 supporte l'arbre 15 à chaque extrémité, ce palier étant lui-même logé dans un boîtier d'isolation 17 permettant de recouvrir les têtes de bobinage. Le boîtier d'isolation comprend en particulier des languettes 17a permettant à la fois l'accroche du boîtier d'isolation au paquet de tôles stator et le centrage de celui-ci dans le tube extérieur, un voile (ou une paroi) cylindrique extérieur 17b, un voile (ou une paroi) cylindrique intérieur 17c et un voile (ou une paroi) radial 17d. L'épaisseur du voile radial (dont la limite est schématisée par un trait pointillé) est suffisamment importante pour garantir un centrage du palier dans le tube extérieur.

Ainsi, le tube extérieur sert de référence commune pour le centrage du paquet de tôles stator et pour le centrage du rotor. Un entrefer 18, souhaité aussi régulier que possible, sépare le rotor et le paquet de tôles stator. La largeur d'entrefer est typiquement 0.4 mm.

Pour un actionneur tubulaire dit « diamètre 40 », destiné à s'insérer à l'intérieur d'un tube d'enroulement de 40 mm (diamètre intérieur 37 mm), les diamètres extérieur et intérieur du tube extérieur sont respectivement 36 et 34 mm, le paquet de tôles stator a un diamètre extérieur de 33 mm, tandis que le rotor de certains modèles a une longueur supérieure à 50 ou même à 70 mm. Les chignons s'étendent typiquement sur 20 mm dans la direction axiale, soit plus d'une fois et demie le rayon du stator.

Dans les figures qui suivent, les pièces inchangées par rapport à la figure 1 conservent une même référence. Les pièces modifiées mais de fonction générale identique conservent un même chiffre unité avec un chiffre dizaine propre à chaque figure.

La figure 2 représente, en coupe, un moteur tubulaire 20 selon un premier mode de réalisation de l'invention. Le paquet de tôles stator 12 n'est pas modifié. Les têtes de bobinages ne sont pas représentées, pour plus de clarté. Un rotor 24 comprend un paquet de tôles rotor 24a et des encoches rotor 24b surmoulées en aluminium, le paquet de tôle et/ou les encoches et/ou les surmoulages étant modifiés au voisinage de chaque extrémité du rotor, dans une zone Z1 repérée par sa trace sur l'arbre rotor, par la création d'un vide 24d ou d'un diamètre épaulé. La bague de court-circuit 24c est modifiée de même par le vide 24d. Ces modifications sont détaillées aux figures 6 et 7.

Le vide 24d permet de libérer un espace d'entrefer supplémentaire, strictement limité à l'extrémité du paquet de tôles stator.

Un boîtier d'isolation 27 a pour fonctions de centrer le paquet de tôle stator dans le tube extérieur et de recouvrir la tête de bobinage de manière à l'isoler au moins du tube extérieur. Il comprend plusieurs pattes de centrage 27a en prolongement d'un voile cylindrique extérieur 27b, un voile cylindrique intérieur 27c, et un voile radial 27d. Dans ce mode de réalisation, le voile radial ne supporte pas de palier. En effet, un manchon 29 est inséré, de préférence par emmanchement serré, par son prolongement tubulaire 29a, dans le paquet de tôles stator 12 en profitant de l'espace d'entrefer libéré par le vide 24d. Une première portée de centrage correspondant à cet emmanchement est désignée par la référence 29b. Ce manchon sert de logement à un palier 26, sur une deuxième portée de centrage 29c. Le manchon présente une rigidité aussi élevée que possible au niveau de son prolongement tubulaire. L'épaisseur de celui-ci étant limitée, la longueur de ce prolongement tubulaire est prise aussi faible que possible. Autrement dit, le palier est disposé aussi proche que possible du rotor.

Préférentiellement, le palier est un palier plein, par exemple en bronze fritté, auto-lubrifié. Il comporte avantageusement un épaulement permettant son arrêt dans le manchon 29. De préférence, le diamètre extérieur du palier (ou de son épaulement) est au moins égal au diamètre extérieur de la bague de court-circuit.

Le jeu entre palier et bague de court-circuit est aussi réduit que possible. Il est par exemple inférieur à 3 mm, de préférence inférieur à 2 mm ou inférieur à 1 mm.

Il peut paraître surprenant de disposer un palier conducteur électrique aussi près d'un stator de moteur à induction, en lui donnant une dimension proche du diamètre du rotor, c'est-à-dire susceptible d'être fortement soumis au champ magnétique d'extrémité du stator. En effet, l'homme du métier peut craindre l'apparition de courants induits dans le palier, provoquant un échauffement important de celui-ci. Il existe effectivement des courants induits, mais beaucoup plus faibles que prévu. A cela, la proximité de la bague de court-circuit peut fournir une explication, puisque les courants induits dans cette dernière s'opposent justement aux variations de champ magnétique. Le palier bénéficierait ainsi d'une protection de type blindage, offerte par la bague de court-circuit. Blindage bien sûr imparfait, mais l'échauffement résiduel du palier devient au contraire un avantage dans la mesure où, par temps froid, il permet de fluidifier immédiatement le lubrifiant contenu dans les pores du palier. Le rendement mécanique du moteur est ainsi amélioré. Cette disposition est donc particulièrement avantageuse. Le palier permet de plus de bloquer tout mouvement axial du rotor, notamment pendant les manipulations de l'actionneur lors de son installation sur site. Il y a alors contact entre la bague de court-circuit et le palier. Lors d'une rotation, le glissement de la bague de court-circuit sur le palier n'est nullement pénalisant en terme de frottement ou d'usure. Le moteur étant à axe horizontal, la charge latérale sur ce palier est négligeable. Le champ magnétique a tendance à centrer le rotor dans le stator.

Préférentiellement, le manchon 29 coulisse librement dans le boîtier d'isolation 27. Le jeu peut être aussi réduit que possible, pourvu que soit satisfaite la relation dimensionnelle qui sera décrite dans le cas de la figure 3. Les vibrations radiales du palier sont transmises par le manchon essentiellement vers le stator et non directement vers le tube extérieur. On bénéficie donc de l'effet de masse du stator pour réduire autant que possible ces vibrations.

Alternativement pour des dimensions plus importantes de moteur tubulaire, la raideur du prolongement tubulaire 29a du manchon peut être diminuée et ajustée pour obtenir un filtrage de deuxième ordre pour les fréquences situées au-delà de la fréquence naturelle du système composé par cette raideur et par la demi-masse du rotor. Dans les dimensions décrites ci-dessus, la fréquence naturelle est de l'ordre de 12 KHz, donc supérieure à l'essentiel des fréquences à filtrer. On a donc intérêt à prendre au contraire une raideur la plus élevée possible.

Le manchon peut sans inconvénient être bloqué axialement, par exemple à l'aide d'un joint de colle entre le manchon et le couvercle isolant dans la zone désignée par la référence Z2. Le blocage peut être assuré par tout autre moyen de verrouillage du manchon dans le boîtier isolant, par exemple à l'aide d'un épaulement 27e. Ce blocage garantit la tenue du rotor, y compris lors de manipulation verticale du moteur ou en cas de choc. Un blocage par collage ne pénalise pas le fait que les vibrations radiales soient transmises majoritairement vers l'alésage du paquet de tôles stator, le chemin de propagation vers le tube extérieur étant pénalisé par le joint de colle, la longueur du voile cylindrique horizontal 27c et l'articulation entre ce dernier et le voile radial 27d.

Pour plus de clarté, on a représenté en agrandissement dans la partie inférieure de la figure 2 la première portée de centrage 29b entre le prolongement tubulaire 29a du manchon et l'alésage central 12a du stator 12.

La figure 3 représente, en coupe, un moteur tubulaire selon un deuxième mode de réalisation de l'invention. Ce deuxième mode diffère essentiellement du premier mode de réalisation en ce le manchon est remplacé par une forme particulière d'un boîtier d'isolation 37, ou bol.

Le boîtier d'isolation 37 comprend plusieurs pattes de centrage 37a en prolongement d'un voile cylindrique extérieur 37b, un voile cylindrique intérieur 37c, et un voile radial 37d. Un prolongement tubulaire 37e du voile cylindrique intérieur est inséré, préférentiellement par emmanchement serré, dans le paquet de tôles stator 12 en profitant de l'espace d'entrefer libéré par un vide 34d réalisé dans le rotor 34 de la même façon que le vide 24d du rotor 24. Une première portée de centrage 37j sur l'alésage central du stator est ainsi définie. Le voile cylindrique intérieur sert de logement à un palier 36, sur une deuxième portée de centrage 37g. Il présente une rigidité aussi élevée que possible au niveau de son prolongement tubulaire. Le palier est disposé aussi proche que possible du rotor. On représente par la zone Z3 l'existence d'un jeu de fonctionnement réduit entre palier et bague de court-circuit du rotor.

Pour plus de clarté, on a représenté en agrandissement dans la partie inférieure de la figure 3 la première portée de centrage 37j entre le prolongement tubulaire 37e du boîtier et l'alésage central 12a du stator 12.

La distance D1 prise entre la position moyenne du palier et le paquet de tôles stator est donc préférentiellement plus faible que la distance D2 prise entre la position moyenne du palier et le voile radial. Comme il sera vu en figure 4, des précautions supplémentaires peuvent être prises pour garantir, comme dans le cas précédent, que les vibrations radiales du palier sont transmises majoritairement à l'alésage du paquet de tôles stator, par exemple en faisant usage d'une articulation 37h reliant le voile intérieur et le voile radial.

On a également représenté en figure 3 une portion d'un cardan 50 permettant de raccorder l'arbre du moteur à l'arbre du réducteur (non représenté) situé en prolongement du moteur dans l'actionneur tubulaire. Le rotor, le palier et le cardan sont disposés de sorte qu'il existe un premier jeu réduit Z3 entre le rotor et le palier et un deuxième jeu réduit Z4 entre le cardan et le palier. Le premier jeu est de préférence inférieur à 2 mm et de préférence inférieur à 1 mm et le deuxième jeu est de préférence inférieur à 2 mm et de préférence inférieur à 1 mm.

La figure 4 représente, en coupe, un ensemble palier et boîtier d'isolation selon le deuxième mode de réalisation, avant et après assemblage du palier 46 dans le boîtier d'isolation 47. Par rapport à la figure 3, les références sont modifiées d'une dizaine uniquement du fait d'une géométrie légèrement différente des pièces. En particulier, le boîtier comprend un renfort 47g permettant le montage serré du palier, et un épaulement 47f permettant l'arrêt du palier lors de son montage. La distance D'1 entre position moyenne du palier et paquet de tôles stator (extrémité du voile extérieur) est prise plus courte que la distance D'2 entre position moyenne du palier et voile radial 47d. La liaison au voile radial constitue une articulation 47h dont la souplesse est avantageusement augmentée par ajout d'une gorge 47i dans le cas d'une variante d'articulation représentée dans un rectangle en trait pointillé.

L'articulation, et plus encore si elle est munie de la gorge 47i, permet de filtrer des vibrations radiales cheminant vers le voile radial 47d.

La figure 5 représente, en coupe agrandie, une extrémité d'un rotor 14 selon l'art antérieur. On désigne par R1 le rayon moyen des encoches rotor. Ce rayon moyen est égal au rayon moyen de la bague de court-circuit.

L'invention peut s'appliquer à un moteur dont le paquet de tôles stator présente une longueur stator LS et dont le rotor est réalisé selon l'art antérieur, mais avec un paquet de tôles de longueur rotor LR telle que :

$$LR = LS - 2 \times D3$$

où D3 représente une distance un peu supérieure à la longueur du prolongement tubulaire 29a, 37e ou 47e. Ainsi, aucun usinage du rotor n'est nécessaire.

Inversement, pour un rotor standard à conserver, on augmente la longueur du paquet de tôles stator de deux fois la distance D3.

La figure 6 représente, en coupe agrandie, une extrémité d'un rotor 24 ou 34 usiné selon l'invention. Ce rotor est par exemple réalisé par usinage au tour d'un rotor selon l'art antérieur de manière à créer le vide 24d ou 34d. L'usinage a lieu sur la bague de court-circuit et sur une longueur D3 du paquet de tôles rotor.

De ce fait, le rayon moyen de la bague de court-circuit R2 est plus faible que le rayon moyen R1 des encoches rotor.

Du fait de l'usinage partiel du rotor sur la distance D3 et au niveau de la bague de court-circuit, la résistance rotorique augmente. De même, l'entrefer 18 augmentant localement au voisinage des zones évidées, il y a légère dégradation des performances du moteur. Cette dégradation est compensée s'il y a lieu par une augmentation de la longueur des paquets de tôles stator et rotor pour une puissance nominale donnée, avant modification.

Si on constate une diminution des performances malgré une augmentation de longueur du rotor et du stator égale à la somme des longueurs évidées, il est alors possible de recourir à une variante de réalisation du rotor.

La figure 7 représente, en coupe agrandie, une variante d'extrémité d'un rotor selon l'invention. On utilise pour la fabrication de ce rotor un premier type de tôles S1, identiques aux tôles rotor de l'art antérieur, puis, au voisinage de l'extrémité du rotor et sur une distance D4, un deuxième type de tôles S2. La longueur D4 du deuxième paquet de tôles rotor est supérieure à la longueur évidée D3 lors de l'opération d'usinage suivant l'injection d'aluminium. Les tôles rotor du deuxième type ont des encoches plus importantes dans leur direction radiale vers le centre que les tôles du premier type. De ce fait, il n'y a pas réduction de section moyenne des encoches surmoulées, même après usinage, par rapport à l'art antérieur. Selon cette variante, la bague de court-circuit présente un rayon moyen R3 nettement plus faible que le rayon moyen des encoches rotor (dans la partie centrale de celui-ci).

La variante représentée à la figure 7 peut aussi être obtenue par utilisation pour la fabrication de ce rotor d'un premier type de tôles S1, identiques aux tôles rotor de l'art antérieur, puis, au voisinage de l'extrémité du rotor et sur une distance D4, un deuxième type de tôles S2.

La longueur D4 du deuxième paquet de tôles rotor est supérieure à la longueur du diamètre épaulé D3. Les tôles rotor du deuxième type ont des diamètres extérieurs plus faibles que les tôles du premier type et des encoches débouchant à l'extérieur des tôles et s'étendant plus loin dans la direction radiale vers le centre que les tôles du premier type. De ce fait, il n'y a pas réduction de section moyenne des encoches surmoulées. Le rotor peut ainsi être fini après l'opération de surmoulage d'aluminium sans nécessiter d'usinage. Selon cette variante, la bague de court-circuit présente un rayon moyen R3 nettement plus faible que le rayon moyen des encoches rotor (dans la partie centrale de celui-ci).

La figure 8 représente une relation dimensionnelle sur un palier du moteur 26 ou 36 selon l'invention.

Il est avantageux que le rayon extérieur R4 du palier, pris au niveau de sa collerette 26a ou 36a s'il en possède une, soit supérieur au rayon moyen R3 ou R2 de la bague de court-circuit.

Dans le cas d'utilisation d'un rotor selon l'art antérieur utilisé avec un stator de plus grande longueur, la relation s'écrit :

$$R4 > R1.$$

Dans un autre mode de réalisation du moteur selon l'invention, on utilise, pour la fabrication du rotor, un premier type de tôles S3, identiques aux tôles du stator de l'art antérieur, puis, au voisinage des extrémités du stator et sur une distance définie, un deuxième type de tôles S4. Les tôles stator du deuxième type ont un diamètre intérieur plus important que les tôles du premier type. De ce fait, les paquets de tôle de stator aux extrémités du stator définissent des alésages épaulés dans lesquels on peut emmancher une portée de manchon ou de boîtier. On peut ainsi utiliser un rotor conforme à l'art antérieur.

Grâce à la structure de moteur selon l'invention, la masse du stator est mise à profit pour contraindre les micro-déplacements des paliers supportant le rotor. Ce résultat est obtenu par l'usage d'une pièce support de palier (un manchon ou un boîtier d'isolation) conçue en un seul bloc et directement centrée dans l'alésage stator, au niveau des extrémités du paquet de tôle stator.

## Revendications

1. Moteur (20 ; 30) à induction de type tubulaire à deux sens de rotation, contenu dans un tube (11) d'un actionneur tubulaire destiné à être installé horizontalement dans un bâtiment, comprenant un rotor (24 ; 34) à cage d'écureuil supporté par des paliers (26 ; 36 ; 46) et un stator (12) comportant un paquet de tôles formant un alésage central (12a) et centré dans le tube, **caractérisé en ce qu'**une pièce support d'un palier (27, 29 ; 37 ; 47) est centrée dans l'alésage central, **en ce que** le palier est de type lisse et conducteur, **en ce que** le palier est disposé au plus près d'une bague de court-circuit (24c) du rotor, de préférence à moins de 2 mm et de préférence à moins de 1 mm, **en ce que** la pièce support comprend une portée de centrage du palier (29c ; 37g ; 47g) et une portée de centrage dans l'alésage central (29b ; 37j), **en ce que** le rotor comprend, à chacune des extrémités du paquet de tôles le constituant, une portion (24d ; 34d) de diamètre réduit et **en ce que** :

   - la pièce support est un manchon (29) qui est inséré par son prolongement tubulaire (29a) dans le paquet de tôles stator (12) en profitant d'un espace d'entrefer libéré par un vide (24d) réalisé dans le rotor ; ou
   - la pièce support est un boîtier d'isolation comprenant une paroi extérieure et un voile cylindrique intérieur dont un prolongement tubulaire (37e) est inséré dans le paquet de tôles stator (12) en profitant d'un espace d'entrefer libéré par un vide (34d) réalisé dans le rotor.

**2.** Moteur selon la revendication 1, **caractérisé en ce que** la portée de centrage dans l'alésage central comprend un épaulement et/ou **en ce que** l'alésage central comprend une portée épaulée.

**3.** Moteur selon l'une des revendications précédentes, **caractérisé en ce que** la pièce support est le manchon (29) ayant pour seule fonction de centrer le palier par rapport à l'alésage central, le manchon étant éventuellement verrouillé par un boîtier (27) recouvrant des chignons de bobinage (13) du stator.

**4.** Moteur selon l'une des revendications précédentes, **caractérisé en ce que** la pièce support est le boîtier (37 ; 47) recouvrant des chignons de bobinage (13) du stator, celui-ci comprenant un prolongement tubulaire (37e ; 47e) d'un voile intérieur (37c, 47c).

**5.** Moteur selon la revendication 4, **caractérisé en ce que** le voile intérieur (47c) est relié au reste du boîtier via une articulation (37h, 47h, 47i).

**6.** Moteur selon l'une des revendications précédentes, **caractérisé en ce que** la pièce support est le boîtier d'isolation comprenant la paroi extérieure et le voile cylindrique intérieur dont le prolongement tubulaire (37e) est inséré dans le paquet de tôles stator (12) en profitant de l'espace d'entrefer libéré par le vide (34d) réalisé dans le rotor, la distance axiale (D1) du centre du palier au stator étant inférieure à la distance axiale (D2) du centre du palier à un voile radial (27d ; 37d ; 47d) du boîtier.

**7.** Moteur selon l'une des revendications précédentes, **caractérisé en ce que** le rayon (R4) d'une partie de palier faisant face au rotor est au moins supérieur au rayon d'une bague de court-circuit du rotor (R1, R2, R3).

**8.** Moteur selon la revendication précédente, **caractérisé en ce qu'**un cardan (50) est disposé sur un arbre du rotor, le palier (36) étant disposé entre le rotor et le cardan, et **en ce qu'**il existe un premier jeu axial réduit (Z3) inférieur à 2 mm et de préférence inférieur à 1 mm entre le rotor et le palier et un deuxième jeu axial réduit (Z4) inférieur à 2 mm et de préférence inférieur à 1 mm entre le cardan et le palier.

**9.** Moteur selon l'une des revendications précédentes, **caractérisé en ce que** la longueur axiale du paquet de tôles constituant le stator est supérieure à la longueur axiale du paquet de tôles constituant le rotor.

**Patentansprüche**

**1.** Rohrförmiger Induktionsmotor (20; 30) mit zwei Drehrichtungen, der in einem Rohr (11) eines rohrförmigen Antriebs enthalten ist, der dazu bestimmt ist, waagerecht in ein Gebäude eingebaut zu werden, umfassend einen Kurzschlussläufer (24; 34), der von Lagern (26; 36; 46) gehalten wird, und einen Ständer (12), der ein Blechpaket aufweist, das eine zentrale und im Rohr zentrierte Bohrung (12a) bildet, **dadurch gekennzeichnet, dass** ein Halterungteil eines Lagers (27, 29; 37; 47) in der zentralen Bohrung zentriert ist, dass das Lager glatt und leitfähig ist, dass das Lager ganz nah an einem Kurzschlussring (24c) des Läufers angeordnet ist, bevorzugt weniger als 2 mm und bevorzugt weniger als 1 mm entfernt, dass das Halterungteil eine Auflagefläche zum Zentrieren des Lagers (29c; 37g; 47g) und eine Auflagefläche zum Zentrieren in der zentralen Bohrung (29b; 37j) umfasst, dass der Läufer an jedem der Enden des ihn bildenden Blechpakets einen Abschnitt (24d; 34d) mit vermindertem Durchmesser umfasst und dass:

- das Halterungteil eine Hülse (29) ist, die über ihre rohrförmige Verlängerung (29a) in das Ständerblechpaket (12) eingeführt ist, wobei sie von einem Spaltraum profitiert, der durch eine im Läufer ausgeführte Ausnehmung (24d) freigegeben wird; oder
- das Halterungteil ein Isoliergehäuse ist, das eine Außenwand und eine zylindrische Innenschale umfasst, von der eine rohrförmige Verlängerung (37e) in das Ständerblechpaket (12) eingeführt ist, wobei sie von einem Spaltraum profitiert, der durch eine im Läufer ausgeführte Ausnehmung (34d) freigegeben wird.

**2.** Motor nach Anspruch 1, **dadurch gekennzeichnet, dass** die Auflagefläche zum Zentrieren in der zentralen Bohrung eine Schulter umfasst und/oder dass die zentrale Bohrung eine stufenförmige Auflagefläche umfasst.

**3.** Motor nach einem der vorhergehenden Ansprüche, **dadurch gekennzeichnet, dass** das Halterungteil die Hülse (29) ist, deren einzige Funktion darin besteht, das Lager in Bezug auf die zentrale Bohrung zu zentrieren, wobei die Hülse gegebenenfalls durch ein Gehäuse (27) verriegelt wird, das Wickelköpfe (13) des Ständers bedeckt.

**4.** Motor nach einem der vorhergehenden Ansprüche, **dadurch gekennzeichnet, dass** das Halterungteil das Gehäuse (37; 47) ist, das Wickelköpfe (13) des Ständers bedeckt, wobei dieser eine rohrförmige Verlängerung (37e; 47e) einer Innenschale (37c, 47c) umfasst.

5. Motor nach Anspruch 4, **dadurch gekennzeichnet, dass** die Innenschale (47c) über ein Gelenk (37h, 47h, 47i) mit dem Rest des Gehäuses verbunden ist.

6. Motor nach einem der vorhergehenden Ansprüche, **dadurch gekennzeichnet, dass** das Halterungsteil das Isoliergehäuse ist, umfassend die Außenwand und die zylindrische Innenschale, deren rohrförmige Verlängerung (37e) in das Ständerblechpaket (12) eingeführt ist, wobei sie von dem Spaltraum profitiert, der durch eine im Läufer ausgeführte Ausnehmung (34d) freigegeben wird, wobei der axiale Abstand (D1) vom Mittelpunkt des Lagers zum Ständer geringer ist als der axiale Abstand (D2) vom Mittelpunkt des Lagers zu einer radialen Schale (27d; 37d; 47d) des Gehäuses.

7. Motor nach einem der vorhergehenden Ansprüche, **dadurch gekennzeichnet, dass** der Radius (R4) eines Lagerteils, das dem Läufer gegenüberliegt, mindestens größer als der Radius eines Kurzschlussrings des Läufers (R1, R2, R3) ist.

8. Motor nach dem vorhergehenden Anspruch, **dadurch gekennzeichnet, dass** ein Kardangelenk (50) auf einer Welle des Läufers angeordnet ist, wobei das Lager (36) zwischen dem Läufer und dem Kardangelenk angeordnet ist, und dass ein erstes vermindertes axiales Spiel (Z3) von weniger als 2 mm und bevorzugt weniger als 1 mm zwischen dem Läufer und dem Lager und ein zweites vermindertes axiales Spiel (Z4) von weniger als 2 mm und bevorzugt weniger als 1 mm zwischen dem Kardangelenk und dem Lager vorliegt.

9. Motor nach einem der vorhergehenden Ansprüche, **dadurch gekennzeichnet, dass** die axiale Länge des den Ständer bildenden Blechpakets größer ist als die axiale Länge des den Läufer bildenden Blechpakets.

**Claims**

1. Tubular induction motor (20; 30) with two directions of rotation, contained in a tube (11) of a tubular actuator designed to be installed horizontally in a building, comprising a squirrel cage rotor (24; 34) supported by bearings (26; 36; 46) and a stator (12) comprising a stack of metal laminations forming a central bore (12a) and centred in the tube, **characterized in that** a support part of a bearing (27, 29; 37; 47) is centred in the central bore, **in that** the bearing is of the plain and conductor type, **in that** it is placed as close as possible to a short-circuiting ring (24c) of the rotor, preferably less than 2 mm and preferably less than 1 mm away, **in that** the support part comprises a bearing surface for centring the bearing (29c; 37g; 47g) and a bearing surface for centring in the central bore (29b; 37j), **in that** the rotor comprises, at each of the ends of the stack of metal laminations forming it, a portion (24d; 34d) of reduced diameter and **in that**:

    - the support part is a sleeve (29) that is inserted via its tubular extension (29a), into the stack of stator metal laminations (12) taking advantage of an air-gap space released by a gap (24d) made in the rotor; or
    - the support part is an insulation casing comprising an outer wall and an inner cylindrical web, the tubular extension (37e) of which is inserted into the stack of stator metal laminations (12) taking advantage of an air-gap space released by a gap (34d) made in the rotor.

2. Motor according to Claim 1, **characterized in that** the bearing surface for centring in the central bore comprises a shoulder and/or in that the central bore comprises a shouldered bearing surface.

3. Motor according to one of the preceding claims, **characterized in that** the support part is the sleeve (29) having the sole function of centring the bearing relative to the central bore, the sleeve if necessary being locked by a casing (27) covering winding end winding (13) of the stator.

4. Motor according to one of the preceding claims, **characterized in that** the support part is the casing (37; 47) covering winding end winding (13) of the stator, the latter comprising a tubular extension (37e; 47e) of an inner web (37c, 47c).

5. Motor according to Claim 4, **characterized in that** the inner web (47c) is connected to the rest of the casing via an articulation (37h, 47h, 47i).

6. Motor according to one of the preceding claims, **characterized in that** the support part is the insulation casing comprising the outer wall and the inner cylindrical web, the tubular extension (37e) of which is inserted into the stack of stator metal laminations (12) taking advantage of an air-gap space released by the gap (34d) made in the rotor, the axial distance (D1) from the centre of the bearing to the stator being less than the axial distance (D2) from the centre of the bearing to a radial web (27d; 37d; 47d) of the casing.

7. Motor according to one of the preceding claims, **characterized in that** the radius (R4) of a portion of bearing facing the rotor is at least greater than the radius (R1, R2, R3) of a short-circuiting ring of the rotor.

8. Motor according to the preceding claim, **characterized in that** a universal joint (50) is placed on a shaft of the rotor, the bearing (36) being placed between the rotor and the universal joint, and **in that** there is a first reduced axial clearance (Z3) less than 2 mm and preferably less than 1 mm between the rotor and the bearing and a second reduced axial clearance (Z4) less than 2 mm and preferably less than 1 mm between the universal joint and the bearing.

9. Motor according to one of the preceding claims, **characterized in that** the axial length of the stack of metal laminations forming the stator is greater than the axial length of the stack of metal laminations forming the rotor.

# Fig. 1

# Fig. 2

# Fig. 3

# Fig. 4

# Fig. 5

# Fig. 6

# Fig. 7

# Fig. 8

R4 > R2

R4 > R3

R4 > R1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0410933 A
- US 3873861 A
- US 5166565 A
- US 6515385 B
- US 6399007 B
- US 5945759 A
- US 2462204 A